(19) Europäisches Patentamt / European Patent Office / Office européen des brevets

(11) **EP 3 093 626 B1**

(12) **EUROPEAN PATENT SPECIFICATION**

(45) Date of publication and mention of the grant of the patent:
**26.10.2022 Bulletin 2022/43**

(21) Application number: **16169337.9**

(22) Date of filing: **12.05.2016**

(51) International Patent Classification (IPC):
**G01D 21/00** (2006.01)   **H04B 5/00** (2006.01)
**H04B 5/02** (2006.01)

(52) Cooperative Patent Classification (CPC):
**G01D 21/00; H04B 5/0043; H04B 5/0056; H04B 5/0081; H04B 5/02**

(54) **SYSTEM AND METHOD FOR THE MEASUREMENT OF QUANTITIES**

SYSTEM UND VERFAHREN ZUR MESSUNG VON GRÖSSEN

SYSTEME ET METHODE POUR LA MESURE DE GRANDEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2015 IT BS20150078**

(43) Date of publication of application:
**16.11.2016 Bulletin 2016/46**

(73) Proprietor: **Universita' degli studi di Brescia 25121 Brescia (IT)**

(72) Inventors:
• **SARDINI, Emilio**
  **I-25121 BRESCIA (IT)**
• **SERPELLONI, Mauro**
  **I-25121 BRESCIA (IT)**
• **BONA, Michele**
  **I-25121 BRESCIA (IT)**

(74) Representative: **Chimini, Francesco Jacobacci & Partners S.p.A. Piazza della Vittoria 11 25122 Brescia (IT)**

(56) References cited:
**US-A- 5 515 041     US-B2- 8 736 425**

• **Michele Bona ET AL: "Telemetric Model for Passive Resistive Sensors in Biomedical Applications", Procedia Engineering, vol. 87, 1 January 2014 (2014-01-01), pages 444-447, XP055239880, NL ISSN: 1877-7058, DOI: 10.1016/j.proeng.2014.11.332**

**Description**

This invention relates to a system and a method for measuring quantities of interest and the wireless transmission of the relevant information.

Telemetry systems are already known that are able to detect, by means of a sensitive element, the value or the variation of a quantity of interest and the wireless transmission of the information measured to a remote reading unit. Although they are also able to operate in normal conditions, such systems are particularly suitable for applications in which the measurement is made in environments having characteristics that are not compatible with the proper use of classical electronics, or in sealed environments in which it is not possible to use wired connections between the sensitive element, located inside said environment, and the conditioning electronics located outside. A telemetry system ensures compliance with these restrictions and, for this reason, lends itself to efficient use in both normal environments and in more critical conditions.

Some application examples primarily concern the industrial sector, where there are high temperatures and/or pressures, systems in motion, explosive atmospheres and/or environments with the presence of chemical, viral and/or bacterial compounds.

In addition, these systems allow monitoring the status of the internal physical and/or chemical quantities, verifying the structural characteristics and/or quality of the materials of objects or systems, even of large size, such as civil infrastructures, for example buildings and bridges. In these last examples, it would be possible to verify damage to them by interpreting the information output by the instrument and acting accordingly. In addition, other widely-used application examples can be the assessment of the state of foods in sealed containers.

Moreover, given that the human body itself can be considered a difficult to access environment, a series of applications is known in the biomedical: among these, one can mention the monitoring of the pressure in the abdominal aorta for the prevention of aneurysms, the intraocular pressure for the evaluation of glaucoma, the intracranial pressure for the control of patients with brain diseases, analysis via electrocardiogram and measuring the stress and possible deformation of the bones during daily activities.

There are telemetry systems, also applicable in some of the above applications, that measure quantities of interest using capacitive and/or inductive transducers, but not resistive transducers. These types of telemetry systems are described, for example, in US 6206835 B1, US 8024970 B2, US 7377168 B2, US 8706208 B2, US 2010/0250167 A1, US 2012/0156688 A1, WO 2005/065773, WO 2013/057630 A1 and WO 2014/137671 A1. These systems have one or more transducers and detect a change of specific frequencies related to the impedance of system to obtain the quantity of interest. In such systems, it is therefore necessary to perform a frequency sweep to reconstruct the trend of the impedance and recognise such significant frequencies, with consequent increase of the measurement time and the complexity of the conditioning electronics.

Other telemetry systems are known for example from US 8,736,425 B2, from US 5,515,041 A and from the scientific article *Telemetric model for passive resistive sensors in biomedical applications,* by M. Bona et al., Procedia Engineering 87 (2014), pages 444-447, published by Elsevier Ltd.

The purpose of this invention is to propose a telemetry system and method that, with respect to the known telemetry systems, allow obtaining a reduction of measurement times, greater simplicity of the conditioning electronics and lower power consumption.

Another purpose of the invention is to extend the use of telemetry techniques also to resistive transduction sensors, significantly broadening the field of measurement physical or chemical quantities.

Said purposes are achieved with a telemetry system according to claim 1, for the wireless measurement of a quantity, comprising at least a passive transducer sensitive to a variation of said quantity and a reading unit coupled to said passive transducer and suitable to detect, condition and process information of a measurement coming from the passive transducer.

Each passive transducer comprises a resistive transduction sensitive element, a calibration capacitor, suitable to define a working frequency of the system, and a first coupling inductor.

The reading unit comprises a second coupling inductor suitable to realise an inductive coupling with said first coupling inductor, and detection means suitable to detect a variation of amplitude of the real part of the impedance of the assembly constituted by the passive transducer and the second coupling inductor, at the working frequency and at a fixed distance between the first inductor and the second coupling inductor, said amplitude of the real part of the impedance depending on the resistance value of the sensitive element.

The resistive transduction sensitive element, the calibration capacitor and the first coupling inductor form an oscillating circuit that can be represented through RLC components.

Note that in an embodiment, the sensitive resistive element is an element specially designed to change its resistance value following a variation of the quantity to be measured, and is thus a separate element from the parasitic resistance of the first coupling inductor. In other words, the sensitive resistive element is a resistive sensor operatively connected to the first inductor.

However, this does not exclude that, in an embodiment variant, the sensitive resistive element may coincide with the parasitic resistance of the first coupling inductor. For example, the passive transducer can be a winding having a parasitic resistance the value of which changes as a function of a variation of the temperature to which the winding is subjected.

Advantageously, each passive transducer is powered by the reading unit by means of the inductive coupling at the working frequency.

This invention also covers a method according to claim 5, for making a telemetric measurement of a quantity, by means of the telemetric system according to any of the telemetric system claims. In a general form of implementation, the method comprises the steps of:

a. inserting a passive transducer in the measuring environment, said passive transducer comprising a resistive transduction sensitive element whose resistance value varies with the value of the quantity to be measured,

b. creating an inductive coupling between said passive transducer and a reading unit;

c. detecting a change of amplitude of the real part of the impedance defined by the passive transduction sensitive element and by said inductive coupling, at a fixed working frequency and maintaining constant the distance between the elements of the passive transducer and the reading unit that realise the inductive coupling, said amplitude of the real part of the impedance depending on the resistance value of the sensitive element,

d. calculating the value of the quantity to be measured on the basis of said variation of amplitude of the real part of said impedance.

Advantageously, the passive transducer is powered by the reading unit by means of the inductive coupling.

The characteristics and advantages of the measurement system and method according to the invention will, in any case, be evident from the following description of its preferred embodiments, provided by way of non-limiting example, with reference to the accompanying figures, in which:

- Figure 1 is a block diagram of the telemetry system according to the invention;
- Figure 2 is a block diagram of the telemetry system, in an embodiment variant;
- Figure 3 illustrates the trend of the real part and imaginary part of the impedance of the system;
- Figure 4 illustrates the trend of the real part of the impedance around the working frequency and the variation of the resistance value of the sensitive resistive element; and
- Figure 5 is a flowchart of the measurement method according to the invention.

The system according to the invention allows the measurement, through the action of at least one sensitive resistive element, of quantities of interest, such as for example temperature, humidity, and deformation, and the wireless transmission of the relevant information. Its operation is based on reading the amplitude reading of the real part of fixed-frequency impedance (which, from now on, will be called the "working frequency"), to then arrive at the resistance value of each sensitive resistive element, and thus to the quantity of interest, through a relationship dependent on the reading of said impedance.

Given its characteristics, although it is also able to operate in normal conditions, this device is particularly suitable for applications in which the measurement is made in environments having characteristics that are not compatible with the proper use of classical electronics, such as very high temperature and/or pressure, particularly aggressive atmospheres, or in sealed environments in which it is not possible to use wired connections between said sensitive element, which would be located inside said environment, and the conditioning electronics located outside.

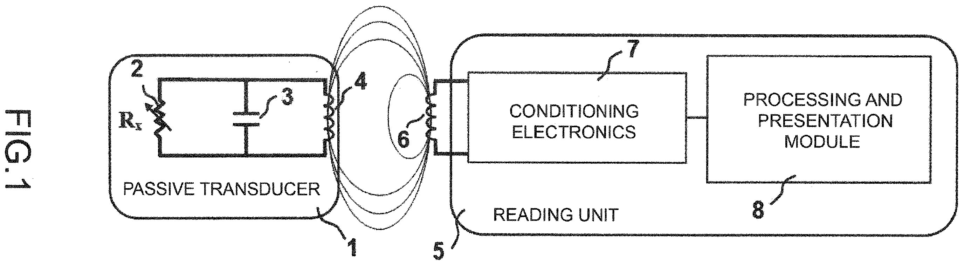

Figure 1 schematically illustrates the main components of the system, in a possible embodiment. In this configuration, the system comprises a passive transducer 1, of the resistive type, modelled by a simple oscillating RLC circuit. The sensitive element is a resistance 2, which varies as a function of the quantity to be measured. The other elements of the passive transducer are a calibration capacitor 3, the value of which is set to adjust the working frequency $f_L$ of the entire system, and a first coupling inductor 4.

The telemetry system also comprises an impedance reading unit 5, comprising a second coupling inductor 6 suitable to couple to the first coupling inductor 4. The inductors 4 and 6 are coupled by magnetic field. In this way, the reading unit 5 and the passive transducer 1 constitute an inductive coupling telemetry system. Advantageously, this allows the reading unit 5 to power the transducer 1 at the working frequency and to receive, from the transducer 1 without the aid of wired connections, information on the quantity to be measured, thanks to a reading of the impedance the same working frequency $f_L$. This avoids the use of elements, such as batteries or wiring, that could jeopardise the integrity of the measurement environment and the proper functioning of the system, facilitating applicability also to situations in which such an environment has the characteristics described above.

The reading unit 5 comprises, in addition to the second coupling inductor 6, of electronic conditioning means 7. Such electronic conditioning means 7 are suitable to receive the signal from the passive transducer 1 and to appropriately process it, for example also using classical conditioning techniques, for example, measuring the variation in current when an alternating voltage is imposed on the ends of the circuit, or the variation of the voltage drop at its ends when driven by an alternating AC current or other forms of conditioning inferable from the literature.

The reading unit 5 also comprises a processing and data presentation module 8, which coordinates the steps of reading, conditioning, conversion, processing and presentation of the information.

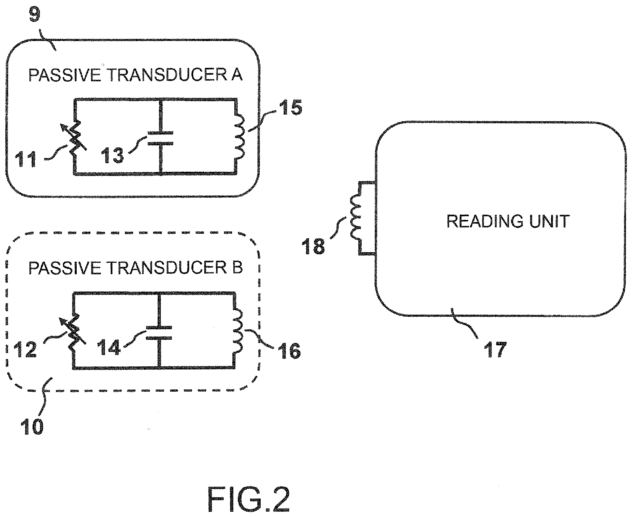

Figure 2 shows the measurement system according to the invention in an embodiment variant. In this configuration there are a first 9 and a second 10 passive transducer. In fact, the telemetry system can use a single passive transducer, as in Figure 1, or two or more of these transducers. This is reflected in the representation of Figure 2, in which the second transducer 10 is depicted with a dashed line. The passive transducers 9 and 10 are both provided with a sensitive element of the resistive type 11; 12, whose resistance value varies as a function of the quantities they measure. Moreover, each passive transducer 9, 10 comprises a calibration capacitor 13; 14, the value of which is set to regulate the working frequency of the entire system, and a first coupling inductor 15; 16.

As in the case of Figure 1, the system of Figure 2 comprises a single impedance reading unit 17, provided with a second coupling inductor 18. The latter is coupled by magnetic field to the first coupling inductors 15 and 16. In this way, the reading unit 17 forms an inductive coupling telemetry system with both the first passive transducer 9 and with both the second passive transducer 10. This allows the reading unit 17 to power the passive transducers 9,10 and to receive, from these transducers, without the aid of wired connections, information related to the quantities to be measured, thanks to an impedance reading the related working frequencies $f_{L1};f_{L2}$.

As mentioned previously, the measurement method adopted by this system is based on an amplitude reading of an impedance at the fixed working frequency and, in particular, of the real part of the impedance of the assembly formed by the oscillating RLC circuit of the passive transducer 1; 9,10 and the second coupling inductor 6; 18 of the reading unit. The usefulness of detecting the real part of the impedance is motivated by the behaviour of its function as the frequency varies, as will be explained below.

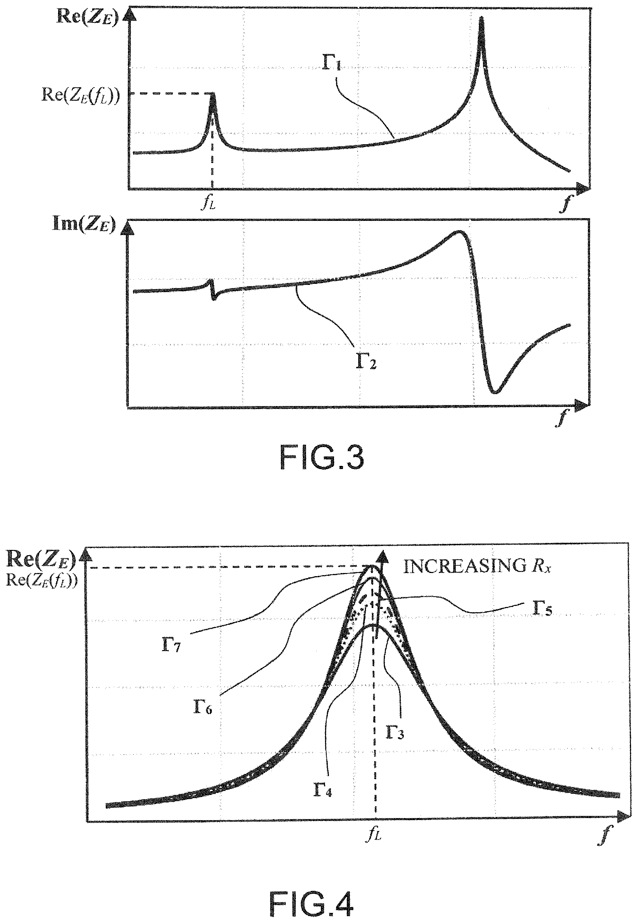

Figure 3 shows the qualitative trends of the real part Re(ZE) and the imaginary part Im(ZE) of the impedance ZE of the assembly defined above, expressed by the curves Γ1 and Γ2, respectively. The working frequency $f_L$ comes to be identified as the value at which the curve Γ1 of the real part of the impedance reaches the first relative maximum. Figure 4 shows some illustrative graphs of the real part Re(ZE) of the impedance ZE, Γ3-Γ7, in the narrow range of frequencies around the working frequency $f_L$. In fact, the peak shown is always the first relative maximum shown in Figure 3. Note that the amplitude of the curves increases with the increase of the resistance Rx of the sensitive resistive element 2 of the passive transducer 1. In this case, the curve Γ3 corresponds to the lesser resistance value Rx, while the curve Γ7 corresponds to the higher value.

Therefore, it is clear how the variation of the resistance Rx influences the frequency response of the system, especially in terms of variation of the peak value relative to its real part, as shown in Figure 4. Furthermore, the frequency at which each maximum stabilises remains fixed in correspondence of the working frequency $f_L$, which therefore becomes the ideal value to be considered in the measuring technique described.

Note that, since the measurement procedure is based exclusively on a variation of the resistance value of the sensitive resistive element, it is possible to perform the measurement at a fixed working frequency, with considerable simplification of the measurement system.

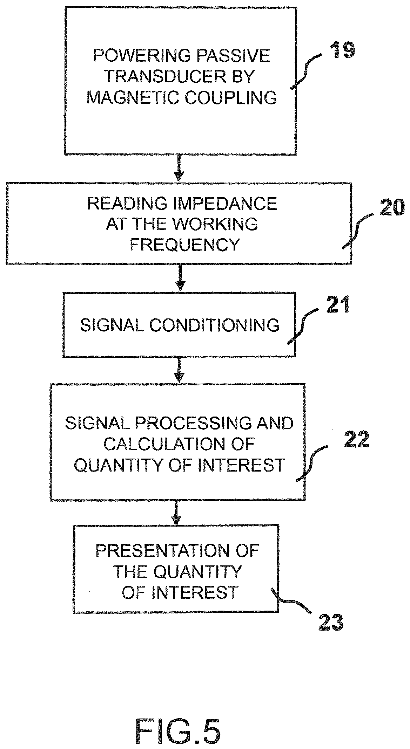

The rules according to which the components of the telemetry system according to the invention interact with each other is illustrated below with reference to the block diagram of Figure 5. The passive transducer 1 is fed by means of the magnetic coupling that is created between the inductors 4 and 6, when these are brought together at a determined distance d (step 19). The magnetic coupling allows the reading unit 5 to detect the variation of the sensitive resistive element 2 of the passive transducer 1. This variation is dependent on the change of the quantity of interest, which, as previously described, is reflected in the variation of the impedance of the assembly constituted by the passive transducer 1 and the second coupling inductor 6.

Therefore, the external unit 5 reads the amplitude of the real part of this impedance, at the working frequency $f_L$ (step 20).

At this point, the impedance reading signal is treated with a suitable conditioning (step 21) by the electronic conditioning means 7, also in terms of filtering and amplification, so as to measure the amplitude of the real part of the impedance.

So, all data related to the amplitude of the real part is collected by the processing and data presentation module 8, which calculates the value of the quantity of interest starting from said data (step 22).

In particular, the value Rx of the resistance 2 of the passive resistive transducer 1 is obtained from the following relation that links to the amplitude of the real part Re detected at the working frequency $f_L$:

$$Rx = \frac{\alpha \, Re(f_L)}{\beta(d) - \gamma \, Re(f_L)}$$

where $Re(f_L)$ is the value of the real part of the impedance at the working frequency $f_L$ (which, as mentioned earlier, is identified with the amplitude of its first relative maximum), while $\alpha$, $\beta$ and $\gamma$ are coefficients dependent on the characteristics of the telemetry system. In particular, $\beta$ is constant when the distance d between the inductors 4 and 6 is kept fixed.

Note that, since the measurement procedure is based exclusively on a variation in the resistance value of the sensitive resistive element, and not on a variation of impedance consequent to a variation of the relative distance between the two coupling inductors, the distance d between the coupling inductors is maintained constant during the measurement. This is to the advantage of speed and simplicity of calculation.

Finally, each quantity of interest, calculated starting from the said resistance 2 of the passive resistive transducer 1, is made available to the user (step 23) by the processing and data presentation module 8.

The telemetry system described thus differs from the measurement systems and methods for its peculiar characteristic of making a measurement of the amplitude of the real part of the impedance, at a fixed frequency, to then arrive at the resistance value of the sensitive element through a relationship dependent on that reading.

To the embodiments of the telemetry measurement system and method according to the invention, a technician skilled in the field, to satisfy contingent requirements, may make modifications, adaptations and replacements of members without departing from the scope of the following claims.

**Claims**

1. Telemetry system for the wireless measurement of a quantity, comprising at least a passive transducer (1; 9, 10) sensitive to a variation of said quantity and a reading unit (5; 17) coupled to said passive transducer and suitable to detect, condition and process information of a measurement coming from the passive transducer, wherein:

   - each passive transducer comprises a resistive transduction sensitive element (2; 11, 12), a calibration capacitor (3; 13, 14), suitable to define a working frequency of the system, and a first coupling inductor (4; 15, 16), wherein the resistive transduction sensitive element (2; 11, 12), the calibration capacitor and the first coupling inductor (4; 15, 16) are connected as an oscillating RLC circuit;
   - the reading unit comprises a second coupling inductor (6; 18) suitable to realise an inductive coupling with said first coupling inductor, and detection means configured to detect a variation of amplitude of the real part of the impedance of the assembly constituted by the passive transducer and the second coupling inductor, at the working frequency and at a fixed distance (d) between the first inductor and the second coupling inductor, said amplitude of the real part of the impedance depending on the resistance value of the sensitive element,
   wherein the value of the calibration capacitor (3; 13, 14) is set to adjust the working frequency ($f_L$) of the system,
   whereby the value of the calibration capacitor (3; 13, 14) is set such that the working frequency ($f_L$) of the system comes to be identified as the value at which a curve ($\Gamma 1$) of the real part of the impedance of the assembly formed by the oscillating RLC circuit of the passive transducer and the second coupling inductor (6; 18) of the reading unit reaches the first relative maximum, **characterized in that**
the reading unit further comprises processing means configured to obtain the resistance value (Rx) of the sensitive element from the amplitude of the real part of the impedance at the working frequency ($Re(f_L)$) according to the relation

$$Rx = \frac{\alpha \, Re(f_L)}{\beta(d) - \gamma \, Re(f_L)}$$

where $\alpha$, $\beta$ and $\gamma$ coefficients are dependent on the characteristics of the passive transducer and the reading unit, and d is the distance between the passive transducer and the reading unit and is kept constant during the measurement.

2. System according to claim 1, wherein the resistive transduction sensitive element (2; 11, 12) is an element operatively connected to the first coupling inductor (4; 15, 16) and distinct from the parasitic resistance of said first coupling inductor.

3. System according to any of the preceding claims, wherein each passive transducer is powered by the reading unit by means of the inductive coupling at the working frequency.

4. System according to any of the previous claims, wherein said sensitive element (2; 11, 12) is a resistance.

5. Method for performing a telemetric measurement of a quantity by means of the telemetric system according to any of the previous claims, comprising the steps of:

   a. inserting the passive transducer in the measuring environment
   b. creating an inductive coupling between said passive transducer and the reading unit;
   c. detecting a change of amplitude of the real part of the impedance defined by the passive transduction sensitive element and by said inductive coupling, at the fixed working frequency and maintaining constant the distance between the elements of the passive transducer and the reading unit that realise the inductive coupling, said amplitude of the real part of the impedance depending on the resistance value of the sensitive element,
   d. calculating the value of the quantity to be measured on the basis of said variation of amplitude of the real part of said impedance, wherein the value (Rx) of the resistance R of the sensitive resistive element depends on the value of the real part Re($f_L$) of the impedance at the working frequency ($f_L$) according to the relation

$$Rx = \frac{\alpha \, \mathrm{Re}(f_L)}{\beta(d) - \gamma \, \mathrm{Re}(f_L)}$$

where $\alpha$, $\beta$ and $\gamma$ coefficients are dependent on the characteristics of the passive transducer and the reading unit, and d is the distance between the passive transducer and the reading unit and is kept constant during the measurement.

6. Method according to the preceding claim, wherein the passive transducer is powered by the reading unit by means of the inductive coupling.

7. Method according to claim 5 or 6, wherein the sensitive element is any passive resistive transduction sensor.

8. Method according to any of claims 5 to 7, wherein said working frequency at which the impedance is read is fixed.

9. Method according to any of claims 5 to 8, wherein the amplitude of a peak of the curve representative of the real part of the impedance, placed in correspondence to a given fixed frequency, changes in response to the variation of the measured quantity by said resistive sensitive element.

**Patentansprüche**

1. Telemetriesystem für die drahtlose Messung einer Größe, umfassend wenigstens einen passiven Transducer (1; 9, 10), welcher empfindlich gegenüber einer Variation der Größe ist, und eine Leseeinheit (5; 17), welche mit dem passiven Transducer gekoppelt ist und dazu geeignet ist, Zustands- und Prozessinformationen einer Messung zu detektieren, welche von dem passiven Transducer kommt, wobei:

   - jeder passive Transducer ein empfindliches Element (2; 11, 12) für eine resistive Transduktion, einen Kalibrierungskondensator (3; 13, 14), welcher dazu geeignet ist, eine Arbeitsfrequenz des Systems zu definieren, und einen ersten Kopplungsinduktor (4; 15, 16) umfasst, wobei das empfindliche Element (2; 11, 12) für eine resistive Transduktion, der Kalibrierungskondensator und der erste Kopplungsinduktor (4; 15, 16) als ein RLC-Schwingkreis verbunden sind;

   - die Leseeinheit einen zweiten Kopplungsinduktor (6; 18), welcher dazu geeignet ist, eine induktive Kopplung mit dem ersten Kopplungsinduktor zu realisieren, und Detektionsmittel umfasst, welche dazu eingerichtet sind, eine Variation einer Amplitude des Realteils der Impedanz der durch den passiven Transducer und den zweiten Kopplungsinduktor konstituierten Anordnung bei der Arbeitsfrequenz und mit einem festen Abstand (d) zwischen dem ersten Induktor und dem zweiten Kopplungsinduktor zu detektieren, wobei die Amplitude des Realteils der Impedanz von dem Widerstandswert des empfindlichen Elements abhängig ist,
   wobei der Wert des Kalibrierungskondensators (3; 13, 14) festgelegt ist, um die Arbeitsfrequenz ($f_L$) des Systems einzustellen,
   wobei der Wert des Kalibrierungskondensators (3; 13, 14) festgelegt ist, so dass die Arbeitsfrequenz ($f_L$) des Systems als der Wert identifiziert wird, bei welchem eine Kurve ($\Gamma 1$) des Realteils der Impedanz der durch den RLC-Schwingkreis des passiven Transducers und des zweiten Kopplungsinduktors (6; 18) gebildeten Anordnung der Leseeinheit das erste relative Maximum erreicht,
   **dadurch gekennzeichnet, dass**
   die Leseeinheit ferner Verarbeitungsmittel umfasst, welche dazu eingerichtet sind, aus der Amplitude des Realteils der Impedanz bei der Arbeitsfrequenz (Re($f_L$)) den Widerstandswert (Rx) des empfindlichen Elements zu erhalten, gemäß der Beziehung

$$Rx = \frac{\alpha Re(f_L)}{\beta(d) - \gamma Re(f_L)}$$

   wobei die Koeffizienten $\alpha$, $\beta$ und $\gamma$ von den Eigenschaften des passiven Transducers und der Leseeinheit abhängig sind und d der Abstand zwischen dem passiven Transducer und der Leseeinheit ist und während der Messung konstant gehalten wird.

2. System nach Anspruch 1, wobei das empfindliche Element (2; 11, 12) für eine resistive Transduktion ein Element ist, welches betriebsmäßig mit dem ersten Kopplungsinduktor (4; 15, 16) gekoppelt ist und von dem parasitären Widerstand des ersten Kopplungsinduktors verschieden ist.

3. System nach einem der vorhergehenden Ansprüche, wobei jeder passive Transducer bei der Arbeitsfrequenz mittels der induktiven Kopplung durch die Leseeinheit angetrieben wird.

4. System nach einem der vorhergehenden Ansprüche, wobei das empfindliche Element (2; 11, 12) ein Widerstand ist.

5. Verfahren zum Durchführen einer telemetrischen Messung einer Größe mittels des telemetrischen Systems nach einem der vorhergehenden Ansprüche, umfassend die folgenden Schritte:

a. Einsetzen des passiven Transducers in die Messumgebung;
b. Schaffen einer induktiven Kopplung zwischen dem passiven Transducer und der Leseeinheit;
c. Detektieren einer Amplitudenänderung des Realteils der Impedanz, definiert durch das empfindliche Element für eine passive Transduktion und durch die induktive Kopplung, bei der festen Arbeitsfrequenz und Konstant-Halten des Abstands zwischen den Elementen des passiven Transducers und der Leseeinheit, welche die induktive Kopplung realisieren, wobei die Amplitude des Realteils der Impedanz von dem Widerstandswert des empfindlichen Elements abhängig ist;
d. Berechnen des Werts der zu messenden Größe auf der Grundlage der Variation der Amplitude des Realteils der Impedanz, wobei der Wert (Rx) des Widerstands R des empfindlichen, resistiven Elements von dem Wert des Realteils $Re(f_L)$ der Impedanz bei der Arbeitsfrequenz ($f_L$) abhängig ist, gemäß der Beziehung

$$Rx = \frac{\alpha Re(f_L)}{\beta(d) - \gamma Re(f_L)}$$

wobei die Koeffizienten $\alpha$, $\beta$ und $\gamma$ von den Eigenschaften des passiven Transducers und der Leseeinheit abhängig sind und d der Abstand zwischen dem passiven Transducer und der Leseeinheit ist und während der Messung konstant gehalten wird.

6. Verfahren nach dem vorhergehenden Anspruch, wobei der passive Transducer mittels der induktiven Kopplung durch die Leseeinheit angetrieben wird.

7. Verfahren nach Anspruch 5 oder 6, wobei das empfindliche Element jeglicher passive, resistive Transduktionssensor ist.

8. Verfahren nach einem der Ansprüche 5 bis 7, wobei die Arbeitsfrequenz, bei welcher die Impedanz gelesen wird, fest ist.

9. Verfahren nach einem der Ansprüche 5 bis 8, wobei sich die Amplitude einer Spitze der für den Realteil der Impedanz repräsentativen Kurve, platziert im Einklang mit einer gegebenen, festen Frequenz, als Reaktion auf die Variation der gemessenen Größe durch das resistive, empfindliche Element ändert.

**Revendications**

1. Système de télémétrie pour la mesure sans fil d'une grandeur, comprenant au moins un transducteur passif (1 ; 9, 10) sensible à une variation de ladite grandeur et une unité de lecture (5 ; 17) couplée audit transducteur passif et adaptée pour détecter, conditionner et traiter des informations d'une mesure provenant du transducteur passif, dans lequel :

- chaque transducteur passif comprend un élément sensible à la transduction résistive (2 ; 11, 12), un condensateur d'étalonnage (3 ; 13, 14), adapté pour définir une fréquence de travail du système, et un premier inducteur de couplage (4 ; 15, 16), dans lequel l'élément sensible à la transduction résistive (2 ; 11, 12), le condensateur d'étalonnage et le premier inducteur de couplage (4 ; 15, 16) sont connectés en tant que circuit RLC oscillant ;
- l'unité de lecture comprend un deuxième inducteur de couplage (6 ; 18) adapté pour réaliser un couplage inductif avec ledit premier inducteur de couplage, et des moyens de détection configurés pour détecter une variation d'amplitude de la partie réelle de l'impédance de l'ensemble constitué par le transducteur passif et le deuxième inducteur de couplage, à la fréquence de travail et à une distance fixe (d) entre le premier inducteur et le deuxième inducteur de couplage, ladite amplitude de la partie réelle de l'impédance dépendant de la valeur de résistance de l'élément sensible,
dans lequel la valeur du condensateur d'étalonnage (3 ; 13, 14) est réglée pour ajuster la fréquence de travail ($f_L$) du système,
au moyen duquel la valeur du condensateur d'étalonnage (3 ; 13, 14) est réglée de sorte que la fréquence de travail ($f_L$) du système est identifiée comme la valeur à laquelle une courbe (Γ1) de la partie réelle de l'impédance de l'ensemble formé par le circuit RLC oscillant du transducteur passif et le deuxième inducteur de couplage (6 ; 18) de l'unité de lecture atteint le premier maximum relatif,
**caractérisé en ce que**
l'unité de lecture comprend en outre des moyens de traitement configurés pour obtenir la valeur de résistance (Rx) de l'élément sensible à partir de l'amplitude de la partie réelle de l'impédance à la fréquence de travail ($Re(f_L)$) selon la relation

$$Rx = \frac{\alpha Re(f_L)}{\beta(d) - \gamma Re(f_L)}$$

où les coefficients α, β et γ dépendent des caractéristiques du transducteur passif et de l'unité de lecture, et d est la distance entre le transducteur passif et l'unité de lecture et est maintenue constante pendant la mesure.

2. Système selon la revendication 1, dans lequel l'élément sensible à la transduction résistive (2 ; 11, 12) est un élément relié de manière fonctionnelle au premier inducteur de couplage (4 ; 15, 16) et distinct de la résistance parasite dudit premier inducteur de couplage.

3. Système selon l'une quelconque des revendications précédentes, dans lequel chaque transducteur passif est alimenté par l'unité de lecture au moyen du couplage inductif à la fréquence de travail.

4. Système selon l'une quelconque des revendications précédentes, dans lequel ledit élément sensible (2 ; 11, 12) est une résistance.

5. Méthode de réalisation d'une mesure télémétrique d'une grandeur au moyen du système télémétrique selon l'une quelconque des revendications précédentes, comprenant les étapes de :

   a. insertion du transducteur passif dans l'environnement de mesure
   b. création d'un couplage inductif entre ledit transducteur passif et l'unité de lecture ;
   c. détection d'un changement d'amplitude de la partie réelle de l'impédance définie par l'élément sensible à la transduction passive et par ledit couplage inductif, à la fréquence de travail fixe et le maintien constant de la distance entre les éléments du transducteur passif et l'unité de lecture qui réalisent le couplage inductif, ladite amplitude de la partie réelle de l'impédance dépendant de la valeur de résistance de l'élément sensible,
   d. calcul de la valeur de la grandeur à mesurer sur la base de ladite variation d'amplitude de la partie réelle de ladite impédance, dans laquelle la valeur (Rx) de la résistance R de l'élément résistif sensible dépend de la valeur de la partie réelle $\text{Re}(f_L)$ de l'impédance à la fréquence de travail ($f_L$) selon la relation

   $$Rx = \frac{\alpha \, \text{Re}(f_L)}{\beta(d) - \gamma \, \text{Re}(f_L)}$$

   où les coefficients α, β et γ dépendent des caractéristiques du transducteur passif et de l'unité de lecture, et d est la distance entre le transducteur passif et l'unité de lecture et est maintenue constante pendant la mesure.

6. Méthode selon la revendication précédente, dans laquelle le transducteur passif est alimenté par l'unité de lecture au moyen du couplage inductif.

7. Méthode selon la revendication 5 ou 6, dans laquelle l'élément sensible est n'importe quel capteur de transduction résistif passif.

8. Méthode selon l'une quelconque des revendications 5 à 7, dans laquelle ladite fréquence de travail à laquelle l'impédance est lue est fixe.

9. Méthode selon l'une quelconque des revendications 5 à 8, dans laquelle l'amplitude d'un pic de la courbe représentant la partie réelle de l'impédance, placé en correspondance avec une fréquence fixe donnée, change en réponse à la variation de la grandeur mesurée par ledit élément sensible résistif.

FIG.1

FIG.2

FIG.3

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6206835 B1
- US 8024970 B2
- US 7377168 B2
- US 8706208 B2
- US 20100250167 A1
- US 20120156688 A1
- WO 2005065773 A
- WO 2013057630 A1
- WO 2014137671 A1
- US 8736425 B2
- US 5515041 A

**Non-patent literature cited in the description**

- **M. BONA et al.** Procedia Engineering. Elsevier Ltd, 2014, vol. 87, 444-447